# EUROPEAN PATENT APPLICATION

(11) **EP 4 647 918 A1**
(43) Date of publication of application: **12.11.2025**
(21) Application number: 23923892.6
(22) Date of filing: 28.12.2023
(51) Int. Cl.: G06F 11/30

(54) **MEMORY MONITORING METHOD AND APPARATUS**

(30) Priority: 22.02.2023 CN 202310187242
(71) Applicant: Huawei Technologies Co., Ltd., Shenzhen, Guangdong 518129 (CN)
(72) Inventor: LI, Tanzhen, Shenzhen, Guangdong 518129 (CN); CHEN, Liang, Shenzhen, Guangdong 518129 (CN); HUANG, Changhua, Shenzhen, Guangdong 518129 (CN)
(74) Representative: MERH-IP Matias Erny Reichl Hoffmann Patentanwälte PartG mbB
(86) International application number: PCT/CN2023/142902
(87) International publication number: WO 2024/174729

(57) **Abstract**

This application discloses a memory monitoring method and apparatus, and relates to the communication field. The memory monitoring method includes: obtaining a first resident set size RSS occupied by a process; and determining, based on the first RSS, first memory including a first PSS and/or a first USS. Resource overheads during monitoring by using the memory monitoring method are low, so that smooth running of a terminal device can be ensured.

## Description

This application claims priority to Chinese Patent Application No. 202310187242.5, filed with the China National Intellectual Property Administration on February 22, 2023 and entitled "MEMORY MONITORING METHOD AND APPARATUS", which is incorporated herein by reference in its entirety.

### TECHNICAL FIELD

This application relates to the communication field, and in particular, to a memory monitoring method and apparatus.

### BACKGROUND

With development of technologies, original equipment manufacturers place increasing emphasis on monitoring of occupation of system resources of processes. Process memory, as an important part of the system resources of the processes, is monitored in real time to obtain real-time monitoring results. The real-time monitoring results may be used in scenarios such as system performance optimization, memory leak detection, and degradation recovery. Real-time monitoring of the process memory is implemented by frequently obtaining a memory size occupied by a process. Three common indicators for measuring the memory size occupied by the process are a proportional set size (proportional set size, PSS) that means to proportionally allocate memory occupied by a shared library, a unique set size (unique set size, USS) that excludes the memory occupied by the shared library, and a resident set size (resident set size, RSS) that includes memory occupied by all shared libraries. Among the three indicators, the PSS and the USS are more applicable in memory monitoring scenarios. In a monitoring scenario, usually, a PSS or a USS of a process is periodically polled and used as a real-time monitoring result.

In existing memory monitoring methods, when the PSS or the USS of the process is polled, query resource overheads are high, which may cause problems such as freezing and overheating of a terminal device.

### SUMMARY

This application provides a memory monitoring method and apparatus, so that resource overheads during monitoring are low, and smooth running of a terminal device can be ensured.

To achieve the foregoing objective, this application uses the following technical solutions.

According to a first aspect, a memory monitoring method is provided. The method includes: obtaining a first resident set size RSS occupied by a process; and determining, based on the first RSS, first memory including a first PSS and/or a first USS.

In the first aspect, the first resident set size RSS occupied by the process is first obtained, and then the first memory (the first PSS and/or the first USS) is determined based on the first RSS. In this case, the PSS or the USS can be determined only by obtaining the RSS without obtaining the PSS or the USS. In this case, required resource overheads are low, and smooth running of the terminal device can be ensured.

In a possible implementation, determining the first memory based on the first RSS includes: determining the first memory based on the first RSS and a preset correction value corresponding to a memory type of the first memory.

In this implementation, the first memory is determined based on the first RSS and the preset correction value, so that the first memory can be efficiently determined by obtaining only the RSS without obtaining the PSS or the USS.

In a possible implementation, obtaining the first RSS occupied by the process includes: obtaining, by using a preset node, the first RSS occupied by the process.

In this implementation, the first RSS occupied by the process is obtained by using the preset node, so that efficiency of obtaining the first RSS is high.

In a possible implementation, the preset correction value includes a PSS correction value and/or a USS correction value, the PSS correction value is obtained through calculation based on a second RSS and a second PSS, and the USS correction value is obtained through calculation based on the second RSS and a second USS, where the second RSS, the second PSS, and the second USS are obtained before the first RSS occupied by the process is obtained.

In this implementation, the preset correction value is obtained through calculation based on the second RSS, the second PSS, and the second USS that are obtained before the first RSS is obtained, which can ensure that accuracy of the preset correction value in a same process is high.

In a possible implementation, after determining the first memory based on the preset correction value and the first RSS, the method further includes: updating the preset correction value.

In this implementation, after the first memory is determined based on the first RSS and the preset correction value, the preset correction value is updated, so that accuracy of the preset correction value can be ensured.

In a possible implementation, updating the preset correction value includes: updating the preset correction value based on a preset update frequency.

In this implementation, after the first memory is determined based on the first RSS and the preset correction value, the preset correction value is updated based on the preset update frequency, so that accuracy of the preset correction value can be ensured.

In a possible implementation, the method further includes: when the first memory meets a preset memory exception condition, obtaining second memory that is occupied by the process and whose memory type is the same as that of the first memory, where the second memory is obtained by accumulating a quantity of pages of a virtual memory area linked list corresponding to the process; and when the second memory does not meet the preset memory exception condition, adjusting the preset update frequency.

In this implementation, when the first memory meets the preset memory exception condition, the second memory occupied by the process is obtained, and when the second memory does not meet the preset memory exception condition, the preset update frequency of the preset correction value is adjusted, so that accuracy of the preset correction value can be ensured.

In a possible implementation, processes with different software information correspond to different preset update frequencies or a same preset update frequency.

In this implementation, processes with different software information correspond to different preset update frequencies or a same preset update frequency, so that an update frequency of the preset correction value is applicable to a corresponding process, thereby ensuring accuracy of the preset correction value.

In a possible implementation, updating the preset correction value includes: when the first memory meets the preset memory exception condition, performing a first operation used to optimize memory occupied by the process; obtaining third memory that is occupied by the process and whose memory type is the same as that of the first memory; and when a difference between the third memory and the first memory does not meet a preset condition, updating the preset correction value.

In this implementation, when the first memory meets the preset memory exception condition, the first operation used to optimize the memory occupied by the process is performed. Then, the third memory occupied by the process is obtained. In addition, when the difference between the third memory and the first memory does not meet the preset condition, the preset correction value is updated, so that accuracy of the preset correction value can be ensured.

In a possible implementation, the method further includes: when allocation of shared memory occupied by the process is not completed and the preset correction value needs to be updated, updating the preset correction value after a delay of a second preset time.

In this implementation, when the allocation of the shared memory occupied by the process is not completed and the preset correction value needs to be updated, the preset correction value is updated after the delay of the second preset time. This can avoid unnecessary update of the preset correction value, thereby saving computing power of a terminal.

In a possible implementation, obtaining the first RSS occupied by the process includes: when the process is created, obtaining the first RSS occupied by the process; or periodically obtaining, based on a first preset time, the first RSS occupied by the process; or when system memory meets a preset memory threshold, obtaining the first RSS occupied by the process; or when a system component generates a memory obtaining request, obtaining the first RSS occupied by the process.

In this implementation, several possible occasions for obtaining the first RSS are described, and the first RSS can be obtained in time based on the several possible occasions.

According to a second aspect, a memory monitoring apparatus is provided. The memory monitoring apparatus may be a chip or a system-on-a-chip in a terminal device. The apparatus includes: a processing module, configured to obtain a first resident set size RSS occupied by a process, where the processing module is further configured to determine first memory based on the first RSS, where the first memory includes a first proportional set size PSS and/or a first unique set size USS.

In a possible implementation, the processing module is specifically configured to determine the first memory based on the first RSS and a preset correction value, where the preset correction value corresponds to a memory type of the first memory.

In a possible implementation, the processing module is specifically configured to obtain, by using a preset node, the first RSS occupied by the process.

In a possible implementation, the preset correction value includes a PSS correction value and/or a USS correction value, the PSS correction value is obtained through calculation based on a second RSS and a second PSS, and the USS correction value is obtained through calculation based on the second RSS and a second USS, where the second RSS, the second PSS, and the second USS are obtained before the first RSS occupied by the process is obtained.

In a possible implementation, the processing module is further configured to: update the preset correction value after determining the first memory based on the preset correction value and the first RSS.

In a possible implementation, the processing module is specifically configured to update the preset correction value based on a preset update frequency.

In a possible implementation, the processing module is further configured to: when the first memory meets a preset memory exception condition, obtain second memory occupied by the process, where a memory type of the second memory is the same as that of the first memory, and the second memory is obtained by accumulating a quantity of pages of a virtual memory area linked list corresponding to the process; and when the second memory does not meet the preset memory exception condition, adjust the preset update frequency.

In a possible implementation, processes with different software information correspond to different preset update frequencies or a same preset update frequency.

In a possible implementation, the processing module is specifically configured to: when the first memory meets the preset memory exception condition, perform a first operation, where the first operation is used to optimize memory occupied by the process; obtain third memory occupied by the process, where a memory type of the third memory is the same as that of the first memory; and when a difference between the third memory and the first memory does not meet a preset condition, update the preset correction value.

In a possible implementation, the processing module is further configured to: when allocation of shared memory occupied by the process is not completed and the preset correction value needs to be updated, update the preset correction value after a delay of a second preset time.

In a possible implementation, the processing module is specifically configured to: when the process is created, obtain the first RSS occupied by the process; or periodically obtain, based on a first preset time, the first RSS occupied by the process; or when system memory meets a preset memory threshold, obtain the first RSS occupied by the process; or when a system component generates a memory obtaining request, obtain the first RSS occupied by the process.

According to a third aspect, this application provides a memory monitoring apparatus. The memory monitoring apparatus includes a processor, and the processor is configured to support the memory monitoring apparatus to perform the method according to the first aspect. Further, the memory monitoring apparatus may further include a memory, where the memory stores computer instructions. When the processor is capable of running the computer instructions, the method according to the first aspect is performed.

According to a fourth aspect, this application provides a computer-readable storage medium. The computer-readable storage medium stores computer instructions. When the computer instructions are run, the method according to the first aspect is performed.

According to a fifth aspect, this application provides a computer program product including instructions. When the computer program product is run on a computer, the computer is enabled to perform the method according to the first aspect.

According to a sixth aspect, this application provides a chip. The chip includes a processor, and the processor is configured to support the memory monitoring apparatus to perform the method according to the first aspect.

For beneficial effects described in the second aspect to the sixth aspect of this application, correspondingly refer to analysis of beneficial effects in the first aspect. Details are not described herein again.

### BRIEF DESCRIPTION OF DRAWINGS

FIG. 1 is a schematic flowchart 1 of a memory monitoring method according to an embodiment of this application;
FIG. 2 is a schematic flowchart 2 of a memory monitoring method according to an embodiment of this application;
FIG. 3 is a schematic flowchart 3 of a memory monitoring method according to an embodiment of this application;
FIG. 4 is a schematic flowchart 4 of a memory monitoring method according to an embodiment of this application;
FIG. 5 is a schematic flowchart 5 of a memory monitoring method according to an embodiment of this application;
FIG. 6 is a schematic flowchart 6 of a memory monitoring method according to an embodiment of this application;
FIG. 7 is a schematic flowchart 7 of a memory monitoring method according to an embodiment of this application;
FIG. 8 is a schematic flowchart 8 of a memory monitoring method according to an embodiment of this application;
FIG. 9 is a schematic flowchart 9 of a memory monitoring method according to an embodiment of this application; and
FIG. 10 is a diagram of a structure of a memory monitoring apparatus according to an embodiment of this application.

### DESCRIPTION OF EMBODIMENTS

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Before embodiments of this application are described, some terms in embodiments of this application are explained.

PSS: A sum of PSSs occupied by all processes is memory usage of an entire system. The PSS is suitable for measuring a memory size in most cases. When the PSS is queried, a virtual memory area (virtual memory area, VMA) linked list needs to be traversed and a quantity of pages corresponding to the process needs to be accumulated. This occupies a large quantity of query resources and takes a long time.

USS: A USS is suitable for detecting problems such as memory bloat and memory leak, because the USS does not contain content of another shared library. When the USS is queried, a VMA linked list needs to be traversed and a quantity of pages corresponding to the process needs to be accumulated. This occupies a large quantity of query resources and takes a long time.

RSS: An RSS is obtained through summation of quantities of file pages, anonymous pages, and shared memory pages that are corresponding to a process. When the RSS is queried, less query resources are occupied and a short time is taken.

The following describes the PSS, the USS, and the RSS with reference to examples. It is assumed that there are only two processes in a system: a process 1 (with a unique set size of 5 M), a process 2 (with a unique set size of 5 M), and a shared library test.so (with a file size of 10 M, 3 M of which is loaded to memory). The process 1 is used as an example, and a PSS, a USS, and an RSS occupied by the process 1 are shown in Table 1.

**Table 1**

| Memory occupied by the process 1 | Size | Description |
|---|---|---|
| RSS | 8 MB | 5 M occupied by the process 1 + 3 M, actually loaded to the memory, of the shared library test.so |
| PSS | 6.5 MB | 5 M occupied by the process 1 + Half of the 3 M, loaded to the memory, of the shared library test.so (because both the two processes load test.so) |
| USS | 5 MB | A unique set size of the process 1 is 5 M |

In a monitoring scenario, a PSS or a USS of a process is typically polled periodically and used as a real-time monitoring result. An Android (Android) system is used as an example. An Android application profiler (Android Application Profiler) is used to poll the PSS or the USS of the process. The Android application profiler is a native Android application memory information monitoring module that collects the PSS or the USS occupied by the process through periodic queries. Specifically, a PSS/USS value of the process is queried by using a proc/pid/smaps node. When a PSS or a USS occupied by a plurality of processes is queried, query resource overheads are high, which may cause problems such as freezing and overheating of a terminal device.

To resolve the foregoing technical problem, embodiments of this application provide a memory monitoring method, in which an RSS occupied by a process is obtained, and a PSS or a USS occupied by the process is determined based on a preset correction value and the RSS. Compared with directly collecting the PSS or the USS occupied by the process, in this method, resource overheads during monitoring are reduced, and smooth running of a terminal device can be ensured. The following describes the method provided in embodiments of this application with reference to the accompanying drawings of this specification.

The memory monitoring method provided in embodiments of this application may be performed by a terminal device (terminal equipment). The terminal device may be user equipment (user equipment, UE), a mobile station (mobile station, MS), a mobile terminal (mobile terminal, MT), or the like. Specifically, the terminal device may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart home, a vehicle-mounted terminal, or the like. In this embodiment of this application, an apparatus configured to implement a function of the terminal device may be a terminal device, or may be an apparatus that can support the terminal device to implement the function, for example, a chip system, where the apparatus may be mounted in the terminal device or used in cooperation with the terminal device. An execution body of the memory monitoring method is not limited in this application. The following describes the method provided in embodiments of this application by using an example in which the apparatus configured to implement the function of the terminal device is a terminal device.

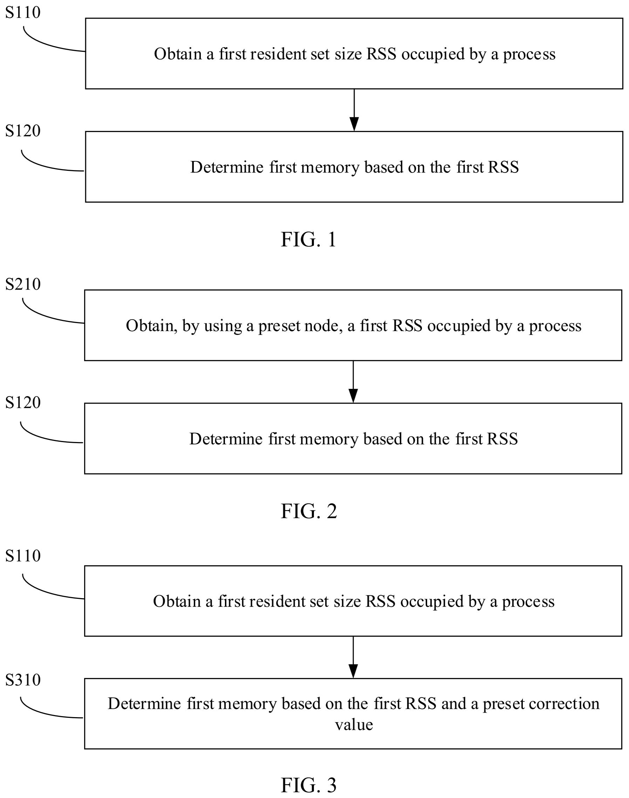

FIG. 1 is a schematic flowchart 1 of a memory monitoring method according to an embodiment of this application. As shown in FIG. 1, the method may include the following steps.

S110: Obtain a first resident set size RSS occupied by a process.

Currently, an RSS is obtained by using a proc/pid/smaps node. During collection, the proc/pid/smaps node traverses a VMA, scans each VMA node, and accumulates a quantity of pages corresponding to the process to obtain the RSS. This is an operation of an O(n) algorithm. Larger process memory usage indicates a longer collection time. This is very time-consuming. However, in embodiments of this application, the first RSS is directly obtained from a kernel. Specifically, quantities of file pages, anonymous pages, and shared memory pages to which the process belongs are directly read, and read content is summed up to obtain the first RSS. A speed of the operation is a speed of the O(1) algorithm. Regardless of how much memory is occupied by the process, a collection time is a constant value, and the value is very small.

S120: Determine first memory based on the first RSS.

With reference to the example in Table 1, it can be learned that in a same process, a numerical correspondence exists among the RSS, the PSS, and the USS. Based on the numerical correspondence, the first memory including a first PSS and/or a first USS can be determined based on the first RSS. A specific memory type of the first memory may be preset according to a requirement of a monitoring scenario; and may include the first PSS, may further include the first USS, or may include the first PSS and the first USS.

The determined first memory may be viewed through a system log, a kernel log, systrace, a kernel flame graph, or the like. Through experiments, an existing method for collecting the RSS and the PSS (or the USS) by using the proc/pid/smaps node and the method provided in embodiments of this application are performed for a same process. Through comparison, RSSs collected by using the two methods are the same, but PSSs (or USSs) determined by using the two methods are usually different but are close.

In this embodiment of this application, the first resident set size RSS occupied by the process is first obtained, and then the first memory (the first PSS and/or the first USS) is determined based on the first RSS. In this case, the PSS or the USS can be determined only by obtaining the RSS without obtaining the PSS or the USS. In this case, required resource overheads are low, and smooth running of the terminal device can be ensured.

FIG. 2 is a schematic flowchart 2 of a memory monitoring method according to an embodiment of this application. In an embodiment, as shown in FIG. 2, S110 may include: S210: Obtain, by using a preset node, the first RSS occupied by the process.

The preset node may be a node dedicated to obtaining the first resident set size RSS occupied by the process, and is configured to obtain the first RSS. The node may be disposed in a folder form in the kernel, to read the quantities of file pages, anonymous pages, and shared memory pages to which the process belongs, and sum the read content up to obtain the first RSS. For example, the preset node may be set to proc/pid/rss.

In this embodiment of this application, the first RSS occupied by the process is obtained by using the preset node, so that efficiency of obtaining the first RSS is high.

In an embodiment, the first RSS occupied by the process in S110 may be obtained on several occasions below:

When the process is created, the first RSS occupied by the process may be obtained. Creation of the process requires monitoring on the PSS or the USS, and the first RSS may be obtained on this occasion, to determine the first PSS or the first USS.

Alternatively, the first RSS occupied by the process may be periodically obtained based on a first preset time. The first preset time may be preset, and the first preset time may be specifically set based on software information corresponding to the process. Processes with different software information may correspond to different first preset times or a same first preset time. For example, the first preset time may be set to an interval of 5 seconds.

Alternatively, when system memory meets a preset memory threshold, the first RSS occupied by the process may be obtained. This scenario usually corresponds to a scenario with high system memory pressure. For example, a physical memory capacity of a mobile phone is 8 G. When 7 G is occupied, system memory pressure is high, and it is considered that the system memory meets the preset memory threshold. The preset memory threshold may be flexibly customized based on a system memory capacity of a terminal.

Alternatively, when a system component generates a memory obtaining request, the first RSS occupied by the process may be obtained. During running of the system component, there is a scenario that requires obtaining of the first PSS or the first USS. In this case, the system component generates the memory obtaining request. The memory obtaining request may request the first PSS, or may request the first USS, or may request the first PSS and the first USS.

In this embodiment of this application, several possible occasions for obtaining the first RSS are described, and the first RSS can be obtained in time based on the several possible occasions.

FIG. 3 is a schematic flowchart 3 of a memory monitoring method according to an embodiment of this application. In an embodiment, as shown in FIG. 3, S120: Determine the first memory based on the first RSS may include the following step:
S310: Determine the first memory based on the first RSS and a preset correction value.

The preset correction value corresponds to a memory type of the first memory. For example, when it is assumed that the first memory includes the first PSS, the preset correction value is a PSS correction value used to correct the PSS. When it is assumed that the first memory includes the first USS, the preset correction value is a USS correction value used to correct the USS. When it is assumed that the first memory includes the first PSS and the first USS, the preset correction value includes the PSS correction value and the USS correction value.

With reference to the example in Table 1, it can be learned that there is a numerical correspondence between an RSS, a PSS, and a USS occupied by a process of same software, and the preset correction value can indicate the numerical correspondence, so that the first memory can be determined based on the preset correction value and the first RSS. For example, the preset correction value may indicate a difference between the first memory and the first RSS. When the PSS correction value corresponding to the first PSS is OFFSETpss, First PSS = First RSS - OFFSETpss. When the USS correction value corresponding to the first USS is OFFSETuss, First USS = First RSS - OFFSETuss. For another example, the preset correction value may indicate a percentage of the first memory relative to the first RSS. When the PSS correction value corresponding to the first PSS is OFFSETpss, First PSS = First RSS × OFFSETpss. When the USS correction value corresponding to the first USS is OFFSETuss, First USS = First RSS × OFFSETuss.

In this embodiment of this application, the first memory is determined based on the first RSS and the preset correction value, so that the first memory can be efficiently determined by obtaining only the RSS without obtaining the PSS or the USS.

In step S310, a role of the preset correction value in determining the first memory is described from an application perspective. Before the preset correction value is applied, the preset correction value needs to be determined first. The following describes a process of determining the preset correction value.

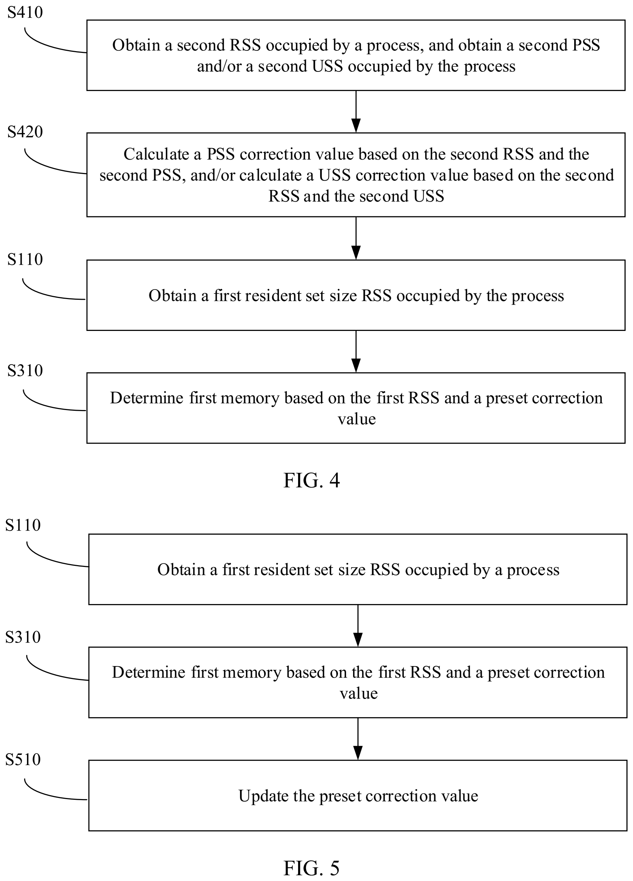

In an embodiment, when the first memory is determined, the PSS correction value and/or the USS correction value need to be applied. FIG. 4 is a schematic flowchart 4 of a memory monitoring method according to an embodiment of this application. As shown in FIG. 4, before S110, the method may further include the following steps:
S410: Obtain a second RSS occupied by the process, and obtain a second PSS and/or a second USS occupied by the process.

The process described in S410 and the process described in S110 are a same process. With reference to the descriptions of S210, the second RSS occupied by the process may be read by using a customized kernel node proc/pid/rss. The second PSS and the second USS may be obtained by using the proc/pid/smaps node. A difference between the second PSS and the first PSS (the second USS and the first USS) lies in that the second PSS and the first PSS are obtained (determined) at different times. To be specific, the first PSS is obtained after the second PSS. In addition, the second PSS is actually read by using the kernel node proc/pid/smaps (or proc/pid/rss), while the first PSS is determined based on the preset correction value and the first RSS (which may be understood as being obtained through estimation).

S420: Calculate a PSS correction value based on the second RSS and the second PSS, and/or calculate a USS correction value based on the second RSS and the second USS.

With reference to the example in Table 1, it can be learned that there is a numerical correspondence between an RSS, a PSS, and a USS occupied by a process of same software, and the PSS correction value and the USS correction value may be determined based on the numerical correspondence. The example in the description of S310 is used again. When the PSS correction value corresponding to the first PSS is OFFSETpss, OFFSETpss = Second RSS - Second PSS. When the USS correction value corresponding to the first USS is OFFSETuss, OFFSETuss = Second RSS - Second USS.

In this embodiment of this application, the preset correction value is obtained through calculation based on the second RSS, the second PSS, and the second USS that are obtained before the first RSS is obtained, which can ensure that accuracy of the preset correction value in a same process is high.

In steps S410 and S420, how to obtain the preset correction value is described from the perspective of generation. However, after the preset correction value is generated and applied in S310, with running of the process, a preset correction value generated earlier may not accurately reflect a data correspondence between the RSS, the PSS, and the USS at a current time. FIG. 5 is a schematic flowchart 5 of a memory monitoring method according to an embodiment of this application. As shown in FIG. 5, to improve precision of the preset correction value, after S310, this embodiment of this application may further include the following step:
S510: Update the preset correction value.

For a principle of updating the preset correction value, refer to the descriptions of calculating the preset correction value in S410 and S420. A difference lies in that time for using the RSS, the PSS, and the USS is changed, but a specific calculation process is the same. Details are not described again.

Further, the preset correction value may be updated based on a preset update frequency. The preset update frequency may be flexibly and specifically set for different software information. Processes with different software information may correspond to different preset update frequencies or a same preset update frequency. The software information includes a software version and a system to which the software is applicable. In this way, an update frequency of the preset correction value is applicable to the corresponding process, thereby ensuring accuracy of the preset correction value.

For example, preset update frequencies corresponding to software A of version 1.0 applicable to Android and software B of version 1.0 applicable to Android may be respectively once every 5 min and once every 30 min. Preset update frequencies corresponding to software A of version 1.0 applicable to Android and software A of version 2.0 applicable to Android may be respectively once every 5 min and once every 6 min. Preset update frequencies corresponding to software A of version 1.0 applicable to Android and software A of version 1.0 applicable to a microphone may be respectively once every 10 min and once every 6 min.

In this embodiment of this application, after the first memory is determined based on the first RSS and the preset correction value, the preset correction value is updated, so that accuracy of the preset correction value can be ensured.

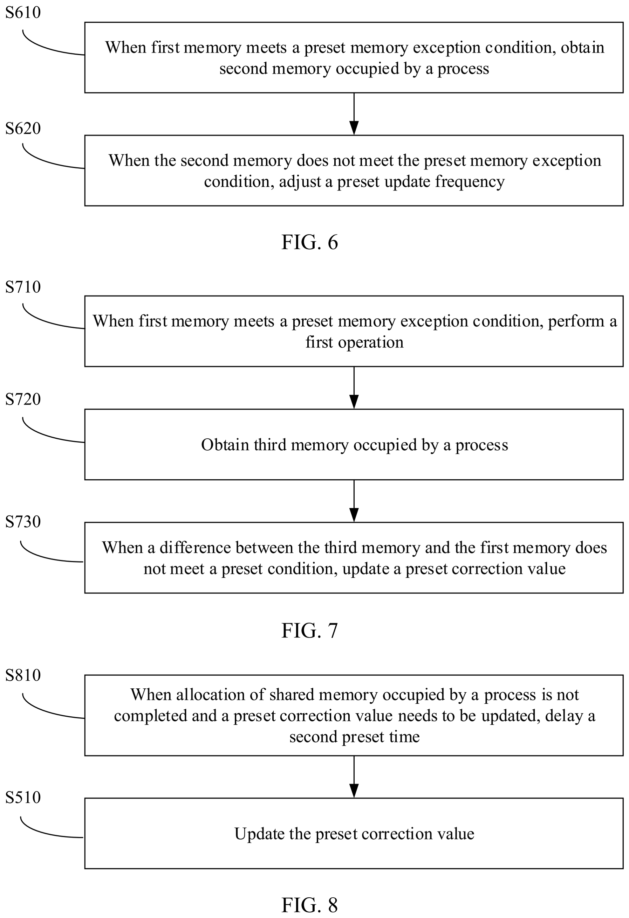

In an embodiment, to further improve accuracy of the preset correction value, the update frequency of the preset correction value may be further adjusted. FIG. 6 is a schematic flowchart 6 of a memory monitoring method according to an embodiment of this application. As shown in FIG. 6, the method may further include the following steps:
S610: When the first memory meets a preset memory exception condition, obtain second memory occupied by the process.

The preset memory exception condition may include memory of the process increasing rapidly in a short time (memory leak) or accumulating little by little over a long time without self-reclaiming (memory bloat). A memory type of the second memory is the same as that of the first memory. For example, if the memory type of the first memory includes a PSS, the memory type of the second memory also includes a PSS. If the memory type of the first memory includes a PSS and a USS, the memory type of the second memory also includes a PSS and a USS. The second memory is obtained by accumulating a quantity of pages of a VMA linked list corresponding to the process, that is, the second memory is actually read.

S620: When the second memory does not meet the preset memory exception condition, adjust the preset update frequency.

Since the second memory is actually read, when the second memory is not abnormal, it indicates that the memory is actually not abnormal. However, the first memory meets the preset memory exception condition. This indicates that the first memory determined based on the preset correction value is not accurate, and the preset update frequency of the original preset correction value may be low, resulting in low accuracy of the preset correction value. In this case, the preset update frequency is adjusted to ensure accuracy of the preset correction value.

In this embodiment of this application, when the first memory meets the preset memory exception condition, the second memory occupied by the process is obtained, and when the second memory does not meet the preset memory exception condition, the preset update frequency of the preset correction value is adjusted, so that accuracy of the preset correction value can be ensured.

In an embodiment, a policy for triggering update of the preset correction value is further provided. FIG. 7 is a schematic flowchart 7 of a memory monitoring method according to an embodiment of this application. As shown in FIG. 7, S510 may include the following steps:
S710: When the first memory meets the preset memory exception condition, perform a first operation.

The first operation is used to optimize memory occupied by the process. Optimizing the memory occupied by the process can eliminate a memory exception. For example, the first operation may be to start a process cleanup interface, restart the process, or the like, which can clear process garbage to optimize the memory occupied by the process.

S720: Obtain third memory occupied by the process.

A memory type of the third memory is the same as that of the first memory. For example, if the memory type of the first memory includes a PSS, the memory type of the third memory also includes a PSS. If the memory type of the first memory includes a PSS and a USS, the memory type of the third memory also includes a PSS and a USS. The third memory is obtained by accumulating a quantity of pages of a VMA linked list corresponding to the process, that is, the third memory is actually read.

S730: When a difference between the third memory and the first memory does not meet a preset condition, update the preset correction value.

If memory is abnormal, after the memory occupied by the process is optimized, the memory occupied by the process is usually greatly different from the memory before the optimization. If accuracy of the preset correction value is high, a difference between the third memory obtained after the memory occupied by the process is optimized and the first memory should also be large. The preset condition is used to determine whether the difference between the first memory and the third memory is "large enough". The preset condition may be flexibly and specifically set for different software information. Processes with different software information may correspond to different preset conditions or a same preset condition. For example, when a process of software A occupies memory of more than 1000 MB during running, the memory occupied by the process may be reduced to about 800 MB after optimization. In this case, the preset condition may be set to be greater than 100 MB. If the difference between the third memory and the first memory does not meet the preset condition, it indicates that the preset correction value is not accurate enough, and the first memory determined based on the preset correction value is inconsistent with the corresponding actual memory. In this case, the preset correction value is updated to ensure precision of the preset correction value.

In this embodiment of this application, when the first memory meets the preset memory exception condition, the first operation used to optimize the memory occupied by the process is performed. Then, the third memory occupied by the process is obtained. In addition, when the difference between the third memory and the first memory does not meet the preset condition, the preset correction value is updated, so that accuracy of the preset correction value can be ensured.

FIG. 8 is a schematic flowchart 8 of a memory monitoring method according to an embodiment of this application. In an embodiment, as shown in FIG. 8, this embodiment of this application may further include the following step:
S810: When allocation of shared memory occupied by the process is not completed and the preset correction value needs to be updated, perform S510 after a delay of a second preset time.

The allocation of the shared memory used by the process not being completed may mean, for example, the process is just started or adjustment (adjustment, adj) of the process is switched. In this case, since the shared memory is allocated in real time, the memory occupied by the process fluctuates greatly, and the preset correction value obtained through updating matches poorly with the memory after the allocation of the shared memory is completed. If the allocation of the shared memory occupied by the process is not completed and the preset correction value needs to be updated, the preset correction value is updated after the delay of the second preset time. This can avoid unnecessary update of the preset correction value, thereby saving computing power of a terminal. The second preset time may be flexibly and specifically set for different software information. Processes with different software information may correspond to different second preset times or a same second preset time. For example, when a time required for completing allocation of shared memory occupied by a process of software A is usually about 20s, the second preset time may be set to 30s.

In this embodiment of this application, when the allocation of the shared memory occupied by the process is not completed and the preset correction value needs to be updated, the preset correction value is updated after the delay of the second preset time. This can avoid unnecessary update of the preset correction value, thereby saving computing power of a terminal.

In an embodiment, some or all parameters (for example, the first RSS, the first memory, the preset correction value, the second RSS, the second PSS, and the second USS) obtained and determined in embodiments of this application may be used for big data analysis to adjust some or all adjustable parameters (for example, the preset update frequency, the preset memory exception condition, the preset condition, the first preset time, and the second preset time) set in embodiments of this application, to improve accuracy of the first memory that is output. During big data analysis, training may be performed by using a big data analysis model, for example, a neural network model, to adjust an adjustable parameter. Specifically, the adjustable parameter is used as a model parameter, the parameters obtained in embodiments of this application are used as label data, and the parameters determined in embodiments of this application are used as training data, to perform iterative training and adjust the adjustable parameter until the model converges. In this case, the adjustable parameter is an adjustable parameter that is adjusted. A specific training method of the neural network model is mature. For details, refer to the corresponding conventional technology. Details are not described again.

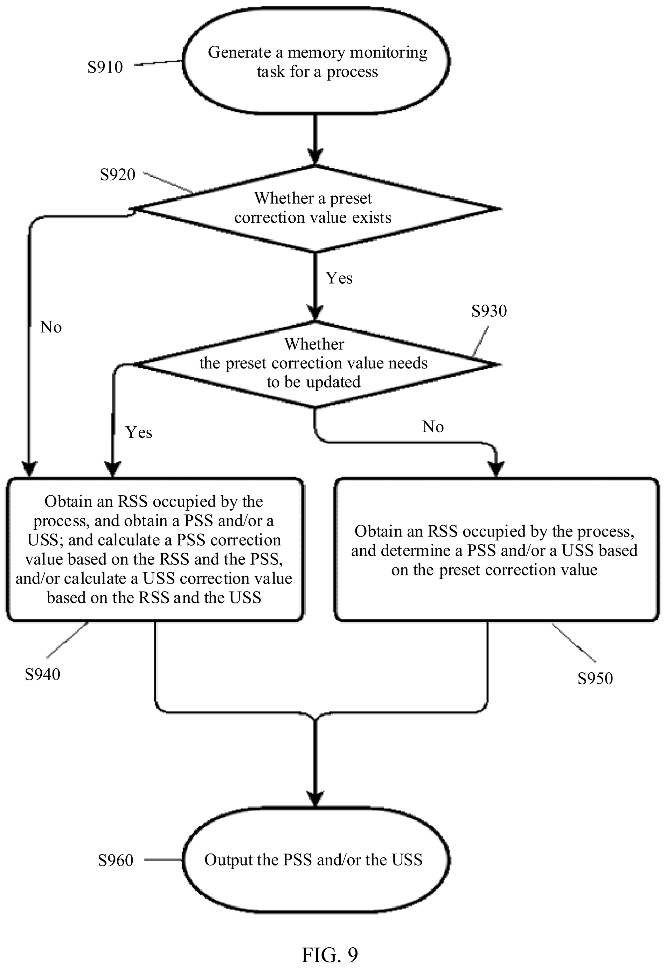

For ease of understanding, the foregoing embodiments separately describe the memory monitoring method provided in embodiments of this application from different perspectives. For further understanding, the following summarizes some procedures in the foregoing embodiments to briefly describe the memory monitoring method provided in embodiments of this application. For specific descriptions and corresponding beneficial effects in the steps in the brief descriptions, refer to the descriptions in the foregoing embodiments. Details are not described again. FIG. 9 is a schematic flowchart 9 of a memory monitoring method according to an embodiment of this application. Correspondingly, in an embodiment, as shown in FIG. 9, the method provided in this embodiment of this application may further include the following steps:
S910: Generate a memory monitoring task for the process.

A scenario of generating the memory monitoring task of the process may be when the process is created, when the first preset time is met, when the system memory meets the preset memory threshold, when the system component generates the memory obtaining request, or another scenario.

S920: Determine whether a preset correction value corresponding to the process exists.

If the preset correction value exists, perform S930. If the preset correction value does not exist, perform S940.

The preset correction value may, after being associated with the process, be stored in a storage medium of a terminal.

S930: Determine whether the preset correction value needs to be updated.

If the preset correction value needs to be updated, perform S940. If the preset correction value does not need to be updated, perform S950.

S940: Obtain an RSS occupied by the process, and obtain a PSS and/or a USS; and calculate a PSS correction value based on the RSS and the PSS, and/or calculate a USS correction value based on the RSS and the USS.

For specific descriptions of S940, refer to the descriptions of calculating the preset correction value in S410 and S420 in embodiments of this application.

S950: Obtain an RSS occupied by the process, and determine a PSS and/or a USS based on the preset correction value.

For specific descriptions of S950, refer to the descriptions of steps S110 and S120, S130, and the like in embodiments of this application.

S960: Output the PSS and/or the USS.

In this embodiment of this application, for a case in which the preset correction value corresponding to the process exists or does not exist, a manner of outputting the PSS and/or the USS is designed, to ensure stable output of the PSS and/or the USS.

The foregoing mainly describes the solutions provided in embodiments of this application from a perspective of execution procedures. It may be understood that, to implement the foregoing functions, the terminal device includes corresponding hardware structures and/or software modules for performing the functions. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into functional modules based on the method examples, for example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. During actual implementation, another division manner may be used.

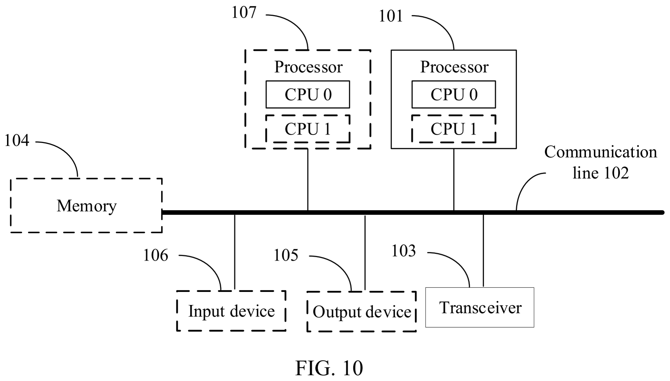

During specific implementation, network elements shown in this application, for example, the terminal device, may use a composition structure shown in FIG. 10 or include components shown in FIG. 10. FIG. 10 is a diagram of a structure of a memory monitoring apparatus according to an embodiment of this application. When the memory monitoring apparatus has a function of the terminal device described in embodiments of this application, the memory monitoring apparatus may be a terminal device, or a chip or a system-on-a-chip in the terminal device.

As shown in FIG. 10, the memory monitoring apparatus may include a processor 101, a communication line 102, a transceiver 103, and a memory 104. The processor 101, the memory 104, and the transceiver 103 may be connected through the communication line 102. In an example, the processor 101 may include one or more CPUs, for example, a CPU 0 and a CPU 1 in FIG. 10.

In an optional implementation, the memory monitoring apparatus includes a plurality of processors. For example, the memory monitoring apparatus may further include a processor 107 in addition to the processor 101 in FIG. 10.

The processor 101 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 101 may be another apparatus having a processing function, for example, a circuit, a component, or a software module.

The communication line 102 is configured to transfer information between the components included in the memory monitoring apparatus.

The transceiver 103 is configured to communicate with another device or another communication network. The another communication network may be an Ethernet, a radio access network (radio access network, RAN), a wireless local area network (wireless local area network, WLAN), or the like. The transceiver 103 may be an interface circuit, a pin, a radio frequency module, a transceiver, or any apparatus that can implement communication.

Further, the memory monitoring apparatus may include a memory 104. The memory 104 is configured to store instructions. The instructions may be computer programs.

The memory 104 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disc storage, a magnetic disk storage medium, or another magnetic storage device. The optical disc storage includes a compressed optical disc, a laser disc, an optical disc, a digital versatile disc, a Blu-ray disc, or the like.

It should be noted that the memory 104 may exist independently of the processor 101, or may be integrated with the processor 101. The memory 104 may be configured to store instructions, program code, some data, or the like. The memory 104 may be located inside the memory monitoring apparatus, or may be located outside the memory monitoring apparatus. This is not limited. When executing the instructions stored in the memory 104, the processor 101 may implement the method provided in embodiments of this application.

In an optional implementation, the memory monitoring apparatus further includes an output device 105 and an input device 106. For example, the input device 106 is a device such as a touchpad or a microphone, and the output device 105 is a device such as a display screen or a speaker (speaker).

It should be noted that the memory monitoring apparatus may be a desktop computer, a portable computer, a network server, a mobile phone, a tablet computer, a wireless terminal, an embedded device, a chip system, or a device having a structure similar to that in FIG. 10. In addition, the composition structure shown in FIG. 10 does not constitute a limitation on the memory monitoring apparatus. In addition to the components shown in FIG. 10, the memory monitoring apparatus may include more or fewer components than those shown in the figure, or some components may be combined, or there may be a different component arrangement.

In this embodiment of this application, the chip system may include a chip, or may include a chip and another discrete component.

An embodiment of this application further provides a memory monitoring apparatus. The memory monitoring apparatus is used in a terminal device. The modules in the memory monitoring apparatus have functions of implementing corresponding steps in the method embodiments of this application, and can achieve corresponding technical effects thereof. For beneficial effects corresponding to the steps performed by the modules, refer to the descriptions of corresponding steps in the method embodiments of this application. Details are not described again. The functions may be implemented by hardware, or may be implemented by hardware executing corresponding software. The hardware or the software includes one or more modules corresponding to the functions. The memory monitoring apparatus may be a terminal device, or a chip or a system-on-a-chip in the terminal device. For example, the memory monitoring apparatus includes:
a processing module, configured to obtain a first resident set size RSS occupied by a process, where the processing module is further configured to determine first memory based on the first RSS, where the first memory includes a first proportional set size PSS and/or a first unique set size USS.

In an embodiment, the processing module is specifically configured to determine the first memory based on the first RSS and a preset correction value, where the preset correction value corresponds to a memory type of the first memory.

In an embodiment, the processing module is specifically configured to obtain, by using a preset node, the first RSS occupied by the process.

In an embodiment, the preset correction value includes a PSS correction value and/or a USS correction value, the PSS correction value is obtained through calculation based on a second RSS and a second PSS, and the USS correction value is obtained through calculation based on the second RSS and a second USS, where the second RSS, the second PSS, and the second USS are obtained before the first RSS occupied by the process is obtained.

In an embodiment, the processing module is further configured to: update the preset correction value after determining the first memory based on the preset correction value and the first RSS.

In an embodiment, the processing module is specifically configured to update the preset correction value based on a preset update frequency.

In an embodiment, the processing module is further configured to: when the first memory meets a preset memory exception condition, obtain second memory occupied by the process, where a memory type of the second memory is the same as that of the first memory, and the second memory is obtained by accumulating a quantity of pages of a VMA linked list corresponding to the process; and when the second memory does not meet the preset memory exception condition, adjust the preset update frequency.

In an embodiment, processes with different software information correspond to different preset update frequencies or a same preset update frequency.

In an embodiment, the processing module is specifically configured to: when the first memory meets the preset memory exception condition, perform a first operation, where the first operation is used to optimize memory occupied by the process; obtain third memory occupied by the process, where a memory type of the third memory is the same as that of the first memory; and when a difference between the third memory and the first memory does not meet a preset condition, update the preset correction value.

In an embodiment, the processing module is further configured to: when allocation of shared memory occupied by the process is not completed and the preset correction value needs to be updated, update the preset correction value after a delay of a second preset time.

In an embodiment, the processing module is specifically configured to: when the process is created, obtain the first RSS occupied by the process; or periodically obtain, based on a first preset time, the first RSS occupied by the process; or when system memory meets a preset memory threshold, obtain the first RSS occupied by the process; or when a system component generates a memory obtaining request, obtain the first RSS occupied by the process.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the terminal apparatus according to any one of the foregoing embodiments, for example, including a data transmit end and/or a data receive end. For example, the computer-readable storage medium may be a hard disk or memory of the terminal apparatus. Alternatively, the computer-readable storage medium may be an external storage device of the terminal apparatus, for example, a plug-in hard disk, a smart media card (smart media card, SMC), a secure digital (secure digital, SD) card, or a flash card (flash card) that is configured on the terminal apparatus. Further, the computer-readable storage medium may include both an internal storage unit and an external storage device of the terminal apparatus. The computer-readable storage medium is configured to store the computer program and other programs and data that are required by the terminal apparatus. The computer-readable storage medium may be further configured to temporarily store data that has been output or is to be output.

An embodiment of this application further provides computer instructions. All or some of the procedures in the foregoing method embodiments may be completed by computer instructions instructing relevant hardware (for example, a computer, a processor, a network device, and a terminal). The program may be stored in the foregoing computer-readable storage medium.

An embodiment of this application further provides a chip system. The chip system may include a chip, or may include a chip and another discrete component. This is not limited. The chip system includes a processor. All or some of the procedures in the foregoing method embodiments may be completed by the chip system. For example, the chip system may be configured to implement the functions performed by the terminal device in the foregoing method embodiments.

In a possible design, the chip system further includes a memory. The memory is configured to store program instructions and/or data. When the chip system runs, the processor executes the program instructions stored in the memory, so that the chip system performs the functions performed by the terminal device in the foregoing method embodiments.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. Alternatively, the memory in embodiments of this application may be a circuit or any other apparatus that can implement a storage function, and is configured to store instructions and/or data.

It should be noted that in the specification, claims, and accompanying drawings of this application, the terms "first", "second", and the like are intended to distinguish between different objects, but are not intended to describe a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in embodiments of this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. In addition, "connection" in embodiments of this application means various connection manners such as a direct connection or an indirect connection, for implementing communication between devices. This is not limited in embodiments of this application.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and receiving. That is, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit. When the integrated unit is implemented in the form of software functional unit and sold or used as an independent product, the integrated unit may be stored in a readable storage medium. Based on this understanding, the technical solutions in embodiments of this application essentially, or some of the technical solutions that contribute to the conventional technology, or all or some of the technical solutions may be embodied in a form of software product. The software product is stored in a storage medium, and includes several instructions used to enable a device, for example, a single-chip microcomputer, a chip, or a processor (processor) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A memory monitoring method, comprising:
obtaining a first resident set size RSS occupied by a process; and
determining first memory based on the first RSS, wherein the first memory comprises a first proportional set size PSS and/or a first unique set size USS.

2. The memory monitoring method according to claim 1, wherein determining the first memory based on the first RSS comprises:
determining the first memory based on the first RSS and a preset correction value, wherein the preset correction value corresponds to a memory type of the first memory.

3. The memory monitoring method according to claim 1 or 2, wherein obtaining the first RSS occupied by the process comprises:
obtaining, by using a preset node, the first RSS occupied by the process.

4. The memory monitoring method according to claim 2, wherein the preset correction value comprises a PSS correction value and/or a USS correction value, the PSS correction value is obtained through calculation based on a second RSS and a second PSS, and the USS correction value is obtained through calculation based on the second RSS and a second USS, wherein the second RSS, the second PSS, and the second USS are obtained before the first RSS occupied by the process is obtained.

5. The memory monitoring method according to claim 2 or 4, wherein after determining the first memory based on the preset correction value and the first RSS, the method further comprises:
updating the preset correction value.

6. The memory monitoring method according to claim 5, wherein updating the preset correction value comprises:
updating the preset correction value based on a preset update frequency.

7. The memory monitoring method according to claim 6, wherein the method further comprises:
when the first memory meets a preset memory exception condition, obtaining second memory occupied by the process, wherein a memory type of the second memory is the same as that of the first memory, and the second memory is obtained by accumulating a quantity of pages of a virtual memory area linked list corresponding to the process; and
when the second memory does not meet the preset memory exception condition, adjusting the preset update frequency.

8. The memory monitoring method according to claim 6 or 7, wherein processes with different software information correspond to different preset update frequencies or a same preset update frequency.

9. The memory monitoring method according to any one of claims 5 to 8, wherein updating the preset correction value comprises:
when the first memory meets the preset memory exception condition, performing a first operation, wherein the first operation is used to optimize memory occupied by the process;
obtaining third memory occupied by the process, wherein a memory type of the third memory is the same as that of the first memory; and
when a difference between the third memory and the first memory does not meet a preset condition, updating the preset correction value.

10. The memory monitoring method according to any one of claims 5 to 9, wherein the method further comprises:
when allocation of shared memory occupied by the process is not completed and the preset correction value needs to be updated, updating the preset correction value after a delay of a second preset time.

11. The memory monitoring method according to any one of claims 1 to 10, wherein obtaining the first RSS occupied by the process comprises:
when the process is created, obtaining the first RSS occupied by the process; or
periodically obtaining, based on a first preset time, the first RSS occupied by the process; or
when system memory meets a preset memory threshold, obtaining the first RSS occupied by the process; or
when a system component generates a memory obtaining request, obtaining the first RSS occupied by the process.

12. A memory monitoring apparatus, comprising:
a processing module, configured to obtain a first resident set size RSS occupied by a process, wherein
the processing module is further configured to determine first memory based on the first RSS, wherein the first memory comprises a first proportional set size PSS and/or a first unique set size USS.

13. The memory monitoring apparatus according to claim 12, wherein the processing module is specifically configured to:
determine the first memory based on the first RSS and a preset correction value, wherein the preset correction value corresponds to a memory type of the first memory.

14. The memory monitoring apparatus according to claim 12 or 13, wherein the processing module is specifically configured to:
obtain, by using a preset node, the first RSS occupied by the process.

15. The memory monitoring apparatus according to claim 13, wherein the preset correction value comprises a PSS correction value and/or a USS correction value, the PSS correction value is obtained through calculation based on a second RSS and a second PSS, and the USS correction value is obtained through calculation based on the second RSS and a second USS, wherein the second RSS, the second PSS, and the second USS are obtained before the first RSS occupied by the process is obtained.

16. The memory monitoring apparatus according to claim 13 or 15, wherein the processing module is further configured to:
update the preset correction value after determining the first memory based on the preset correction value and the first RSS.

17. The memory monitoring apparatus according to claim 16, wherein the processing module is specifically configured to:
update the preset correction value based on a preset update frequency.

18. The memory monitoring apparatus according to claim 17, wherein the processing module is further configured to:
when the first memory meets a preset memory exception condition, obtain second memory occupied by the process, wherein a memory type of the second memory is the same as that of the first memory, and the second memory is obtained by accumulating a quantity of pages of a virtual memory area linked list corresponding to the process; and
when the second memory does not meet the preset memory exception condition, adjust the preset update frequency.

19. The memory monitoring apparatus according to claim 17 or 18, wherein processes with different software information correspond to different preset update frequencies or a same preset update frequency.

20. The memory monitoring apparatus according to any one of claims 16 to 19, wherein the processing module is specifically configured to:
when the first memory meets the preset memory exception condition, perform a first operation, wherein the first operation is used to optimize memory occupied by the process;
obtain third memory occupied by the process, wherein a memory type of the third memory is the same as that of the first memory; and
when a difference between the third memory and the first memory does not meet a preset condition, update the preset correction value.

21. The memory monitoring apparatus according to any one of claims 16 to 20, wherein the processing module is further configured to:
when allocation of shared memory occupied by the process is not completed and the preset correction value needs to be updated, update the preset correction value after a delay of a second preset time.

22. The memory monitoring apparatus according to any one of claims 12 to 21, wherein the processing module is specifically configured to:
when the process is created, obtain the first RSS occupied by the process; or
periodically obtain, based on a first preset time, the first RSS occupied by the process; or
when system memory meets a preset memory threshold, obtain the first RSS occupied by the process; or
when a system component generates a memory obtaining request, obtain the first RSS occupied by the process.

23. A memory monitoring apparatus, wherein the memory monitoring apparatus comprises a processor, and the processor is configured to support the memory monitoring apparatus to perform the method according to any one of claims 1 to 11.

24. A computer-readable storage medium, wherein the computer-readable storage medium stores computer instructions, and when the computer instructions are run, the method according to any one of claims 1 to 11 is performed.
